# EUROPEAN PATENT APPLICATION

(11) **EP 1 739 976 A1**
(43) Date of publication of application: **03.01.2007**
(21) Application number: 05106017.6
(22) Date of filing: 01.07.2005
(51) Int. Cl.: H04N 13/00

(54) **Arrangement for creating a three dimensional display**

(71) Applicant: Sony Ericsson Mobile Communications AB, 221 88 Lund (SE)
(72) Inventor: Hunt, Alexander, 212 17 Malmö (SE); Grip, Martin, 211 30 Malmö (SE)
(74) Representative: Akerman, Marten Lennart

(57) **Abstract**

The invention relates to an arrangement for creating a three dimensional display in a device comprising: a display means (6a, 6b) with pixels having the capacity of emitting or reflecting light; a directional light transfer means (4) having the capacity of transferring light in certain directions and/or blocking light in other directions. The arrangement comprises a multiplex control means having the capacity of receiving image signals containing image information related to two or more viewing angles and of separating images related to separate viewing angles. The multiplex control means is adapted to control the display means to display images intended for separate viewing angles and to control the directional light transfer means (4) to switch the display rapidly between such images in a time multiplexed fashion. This results in that the image resolution may be maintained in all viewing angles.

## Description

### Field of the invention

The present invention relates to an arrangement for creating a three dimensional, 3D, display, and more particularly an arrangement in which the whole display is used for displaying images directed in separate viewing angles and the display is switched rapidly between such images in a time multiplexed fashion. This results in that the image resolution may be maintained in all viewing angles.

### State of the art

Today there exist several systems for creating 3D displays. In principle, two images are displayed at the same time on the display. One image is intended for the right eye and the other image is intended for the left eye.

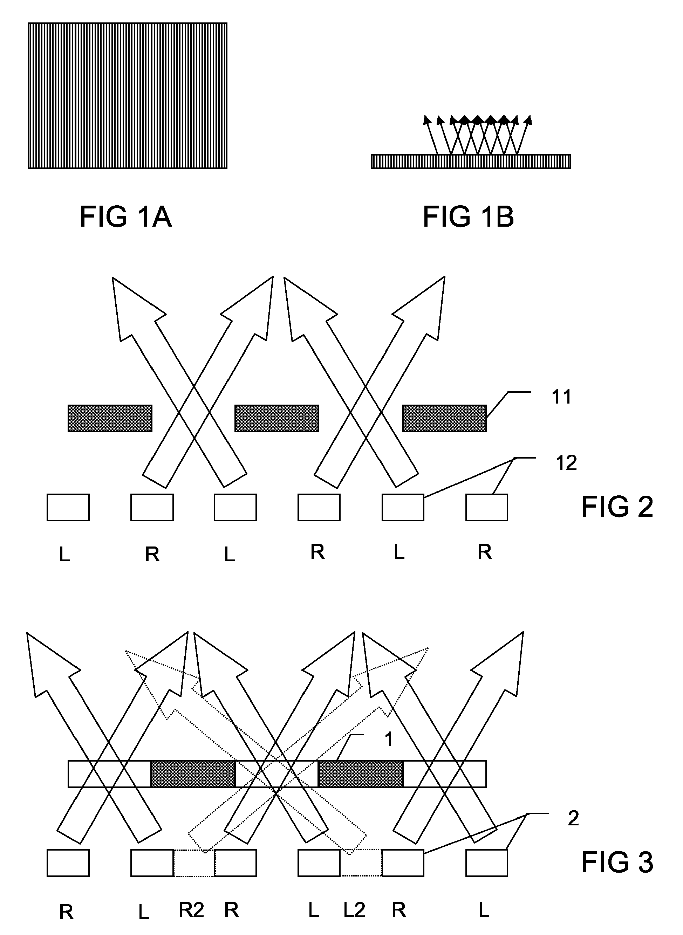

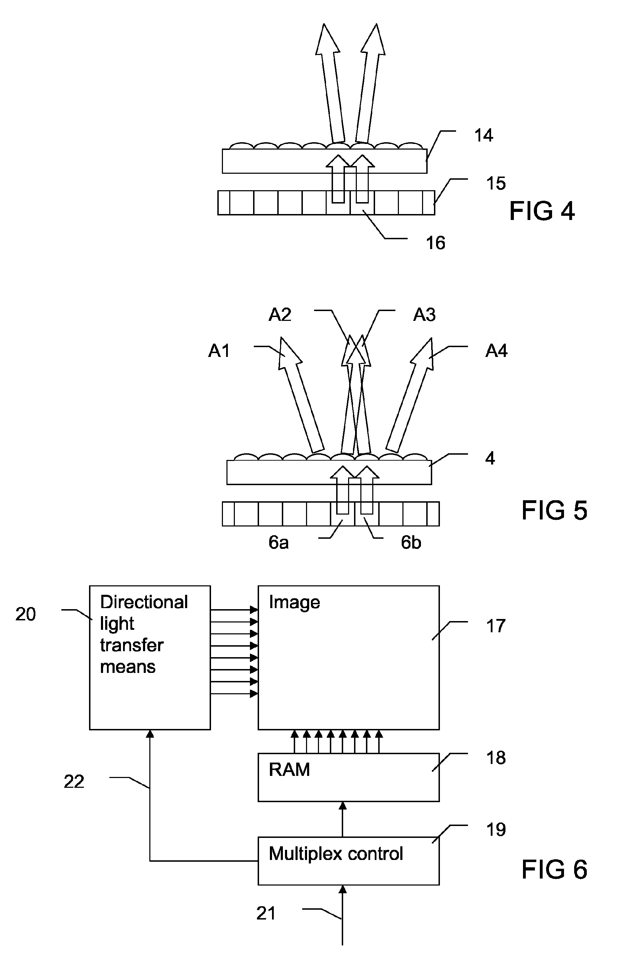

One approach uses parallax barriers. This is described more in detail below with reference to fig. 2. A fixed screen pattern of vertical strips is blocking and letting through different viewing angles intended for the two eyes. Another approach uses a lenticular lens system. This is described more in detail below with reference to fig. 4. A lenticular lens system has the capacity of directing light in a certain direction. In the prior art systems, light from vertical bands of the display or individual pixels is directed in separate directions in a fixed pattern.

A common feature of the prior art systems is that each image intended for a viewing angle occupies part of the total image. Thus, only a part of all the pixels is available for each image, resulting in decreased resolution. In other words, the image intended for the left (or the right) eye is distributed over the whole area of the display, but only half of the total number of pixels is available. The viewer will experience a decrease in the resolution. The image will look grainy and pixely. The resolution will not be restored by combining the image for the left eye with the image for the right eye.

### Summary of the invention

The present invention solves this problem by letting each image for all viewing angles occupy the whole display area with all pixels available. Thus, there is no decreased resolution in the separate images. The display is instead shared by the separate viewing angles by time multiplexing. Each viewing angle is assigned a time share, a "time slot" of the total time available, and the display is switched rapidly between the viewing angles. The switching is done so fast that it is not noticeable to the human eye. This approach results in that there is no decreased resolution in the images intended for the separate viewing angles.

The invention provides an arrangement for creating a three dimensional display in a device comprising:
a display means with pixels having the capacity of emitting or reflecting light; a directional light transfer means having the capacity of transferring light in certain directions and/or blocking light in other directions.

According to the invention, the arrangement comprises a multiplex control means having the capacity of receiving image signals containing image information related to two or more viewing angles and of separating images related to separate viewing angles. The multiplex control means is adapted to control the display means to display two or more images of which, in each image, each pixel is associated with a specific viewing angle; to switch between images related to separate viewing angles at a switching frequency; and to control the directional light transfer means to admit viewing of each pixel in its specific viewing angle only, the switching between images being synchronised with the control of the directional light transfer means.

In one embodiment, the multiplex control means is adapted to control the display means to display two images and the switching frequency is approximately 48 Hz or greater.

In another embodiment, the multiplex control means is adapted to control the display means to display four images and the switching frequency is approximately 96 Hz or greater.

Suitably, the device comprises a random access memory (RAM) for storing pixel values of the display means, and the multiplex control means is adapted to control the random access memory (RAM) to be updated at the switching frequency.

The random access memory (RAM) may be adapted to store two images at the same time, wherein the multiplex control means is adapted to control individual pixel values of the random access memory (RAM) to be updated at half the switching frequency.

Suitably, said viewing angles are separated by approximately 7°.

In one embodiment, the directional light transfer means comprises a parallax barrier means with elements that may be activated and deactivated, such that light emanating from a first set of pixels of the display means are transferred in a first set of viewing angles and light emanating from a second set of pixels of the display means are transferred in a second set of viewing angles.

The parallax barrier means may be controlled to transfer light in further defined viewing angles, such that light emanating from a third set of pixels of the display means are transferred in a third set of viewing angles and light emanating from a fourth set of pixels of the display means are transferred in a fourth set of viewing angles

Preferably, the multiplex control means is adapted to control the directional light transfer means such that the whole display means is visible in all sets of viewing angles in a time multiplexed fashion.

The parallax barrier means may comprise controllable display strips.

In another embodiment, the directional light transfer means comprises a lenticular lens system arranged with lens elements that may be controlled to transfer light in defined viewing angles, such that light emanating from a first set of pixels of the display means are transferred in a first set of viewing angles and light emanating from a second set of pixels of the display means are transferred in a second set of viewing angles.

The lenticular lens system may be controlled to transfer light in further defined viewing angles, such that light emanating from a third set of pixels of the display means are transferred in a third set of viewing angles and light emanating from a fourth set of pixels of the display means are transferred in a fourth set of viewing angles.

Preferably, the multiplex control means is adapted to control the directional light transfer means such that the whole display means is visible in all sets of viewing angles in a time multiplexed fashion.

The device may be a mobile telephone, a pager, a communicator, an electric organiser, a smartphone, a camera or a game device.

### Brief description of the drawings

The invention will be described in detail below with reference to the accompanying drawings, in which:
fig. 1A is a schematic view of a display with a vertical screen pattern,
fig. 1B is a schematic side view of the display of fig. 1A, showing separate viewing angles,
fig. 2 is a schematic view of a fixed parallax barrier system according to the prior art,
fig. 3 is a schematic view of a switched parallax barrier system according to the present invention,
fig. 4 is a schematic view of a fixed lenticular lens system according to the prior art,
fig. 5 is a schematic view of a switched lenticular lens system according to the present invention, and
fig. 6 is a schematic view of the time multiplexed control according to the present invention.

### Detailed description of preferred embodiments

The invention relates to the creation of three dimensional images in devices with flat panel displays, such as mobile telephones, pagers, communicators, electric organisers, smart phones or game devices etc. The devices of course include a lot of functions that are not related to the present invention. These functions are not described here. The creation of three dimensional image signals is known and does not form part of the invention. The display means and lenticular lens system may also be of conventional design. The display means may be a monochrome or a colour display, in which each pixel is capable of creating coloured light. Such displays are known in the art.

The principle of one approach to a 3D image is explained with reference to fig. 1A and 1B. In fig. 1A it is seen that half the image is blocked by a strip pattern. This strip pattern is at a certain distance from an underlying image. Thus, the left and right eyes of a viewer each see a strip pattern, but due to parallax, i.e. different viewing angles for the left and right eyes as illustrated in fig. 1B, the strip pattern is shifted in the left-right direction. In other words, the left and right eyes see different parts of the underlying image.

Assuming that the display is a rather small display, such as in a mobile telephone, the normal viewing distance is approximately 40 centimetres and the separation between the viewing angles should be approximately 7 degrees for a viewer with a distance between the eyes of approximately 5 centimetres. In fig. 1B the angle is exaggerated. By designing the underlying image, different images are viewed by the left and the right eye. Thus, the viewer will experience that the image is three dimensional, even though it results from a flat display (albeit with two different 2-dimensional images).

Fig. 2 illustrates one prior art approach to achieve such a 3D display. The screen pattern is formed by fixed strips 11. The underlying display is formed by bands of pixels 12 emitting or reflecting light. It is seen that half of the pixel bands 12 marked L are viewable in one viewing angle (for the left eye), while the other half of the pixel bands 12 marked R are viewable in another viewing angle (the right eye). Since the strips 11 are always located in the same positions, the same bands 12 are assigned to either the left or the right image the whole time. It is clear that this approach reduces the resolution of the image.

Fig. 3 shows a corresponding approach but improved according to the present invention. Instead of fixed strips there is a directional light transfer means having switchable or variable strips, which may be controlled to transfer or block light from the display in various viewing angles. The strips may for example be controllable LCD (liquid crystal display) strips implemented by means of an additional LC glass layer. Thus, the controllable strips 1 may be switched on and off in a pattern corresponding to fig. 1A. At one moment, the situation may be as shown in fig. 2. However, in another moment the strips 1 and images emitted by the pixel bands 2 have been shifted to achieve the situation as illustrated in fig. 3. Assuming that fig. 3 illustrates the same pixel bands 2 as in fig. 2, it will be appreciated that the pixel band displaying the left image in one moment will be displaying the right image in the next moment, and vice versa.

Thus, all pixels are used in both viewing angles, but not at the same time. In other words, the left and right images both occupy the whole display in a time multiplexed fashion. The variable strips 1 and images are shifted at a suitable frequency. For conventional video, such as in television or films, the whole image is typically shifted at 24 Hz. Thus, a suitable switching frequency for the variable strips and images 1 is 48 Hz. In case of moving images, the whole image, right and left viewing angle, is seen once by the eyes, before shifting to the next image in the video sequence.

The division of the display need not be in strips or bands as shown in fig. 1A, but may be in any predefined pattern covering the whole display. This is because the viewing angle of each pixel may be controlled individually by the directional light transfer means in the form of switchable or variable elements associated with each pixel.

The viewer will not notice any flickering in the image and also the resolution will be the same as for a normal two dimensional display. Due to the strips 1 there will be a loss of light intensity (just as in the prior art approach in Fig. 2), but, if desired, this may be compensated by increasing the light emission from the display means by adding diodes or increasing the current.

Fig. 4 shows another prior art approach of achieving a 3D display. This approach uses a lenticular lens system 14 with controllable lens elements. Such a component has the capacity of directing light in various directions in a controllable fashion. By applying voltages over the component, the shapes and refractive indices of the lens elements are controlled. The lenticular lens system 14 is arranged over a display means 15 such that each pixel 16 of the display means or a vertical band of pixels directs light into a controllable part of the lenticular lens system 14. As is shown in fig. 4, light directed straight up from the display in one band is diverted to the left, while another band is directed to the right. In other directions the bands will look dark. In the prior art approach, each pixel 16 or band of pixels is intended either for the left or the right eye. Thus, for the same reason as the approach of fig. 2, the resolution in each image is decreased.

Fig. 5 illustrates a similar approach but improved in accordance with the present invention. Similarly to the prior art there is a lenticular lens system 4 and a display means 5 emitting light upwards through the lenticular lens system 4. However, the transferring angles of the lenticular lens system are not fixed but variable. Looking at one moment, two pixels or bands of pixels 6 of the display may emit light through the lenticular lens system 4 as shown in fig. 4, i.e. the viewing angle of the left pixel (6a) is to the left and the viewing angle of the right pixel (6b) is to the right. The whole display is divided in pixels or pixel bands belonging to a first image to be viewed in a first viewing angle like the left pixel (6a) and pixels or pixel bands belonging to a second image to be viewed in a second viewing angle like the right pixel (6b). At the next moment, the lenticular lens system 4 has been shifted to the situation as shown in fig. 5 for the middle arrows. Thus, the left pixel 6a is emitting light to the right and the right pixel 6b is emitting light to the left. At the same time the images have also been shifted such that the first image to be viewed in a first viewing angle is now transmitted from the right pixel (6b), and the second image to be viewed in a second viewing angle is now transmitted from the left pixel (6a). In other words, light emanating from a first set of pixels of the display means are transferred in a first set of viewing angles and light emanating from a second set of pixels of the display means are transferred in a second set of viewing angles. By switching the viewing angles and the images, all pixels are used for all viewing angles in a time multiplexed fashion. Thus, all pixels are used in both viewing angles, but not at the same time. As in the first embodiment, the left and right images both occupy the whole display in a time multiplexed fashion.

Also in the embodiment with the lenticular lens system 4, the division of the display need not be in bands as shown in fig. 1A, but may be in any predefined pattern covering the whole display. This is because the viewing angle of each pixel may be controlled individually by the directional light transfer means in the form of the lenticular lens system 4.

As in the previous embodiment, the shifting frequency of the directional light transfer means 4 and images is suitably 48 Hz or greater.

The embodiment in fig. 5 may also be used to provide viewing of 3D images at a greater angle. This makes it possible for a user to move his head a bit to a side without losing the three dimensional effect (or rather the three dimensional effect will be lost temporarily but found again further away) or allows for more viewers situated next to each other. We assume that the image signal contains information about e.g. four separate angles as indicated by the arrows A1 to A4. At one moment in time, a fourth of the pixels of the display means 5 may be viewed as shown by the arrow A1, i.e. furthest to the left, one fourth in accordance with the arrow A2, etc. (This corresponds to three viewing positions, with the viewing angle pairs for the left and the right eyes respectively A1/A2, A2/A3, and A3/A4. The viewing angle pairs result in three different three dimensional images. In a first viewing position angled to the left in fig. 5, a person sees all the display in the direction of the arrow A1 with his right eye and all the display in the direction of the arrow A2 with his left eye. This results in the first three dimensional image. In a second viewing position straight in front of the display in fig. 5, a person sees all the display in the direction of the arrow A2 with his right eye and all the display in the direction of the arrow A3 with his left eye. This results in the second three dimensional image. In a third viewing position angled to the right in fig. 5, a person sees all the display in the direction of the arrow A3 with his right eye and all the display in the direction of the arrow A4 with his left eye. This results in the third three dimensional image.) It will be appreciated that four different patterns are required, so that the whole display may be viewed for each separate viewing angle. The display is then time multiplexed and synchronized with the lenticular lens system 4, so that each angle uses all pixels one fourth of the total time. This of course requires two times faster switching than in the case of two viewing angles. A switching frequency of 98 Hz or greater is suitable.

In another embodiment with the lenticular lens system 4, the display is shared by letting the whole display emit first in one viewing angle and then shifting the whole display to the next viewing angle.

Fig. 6 illustrates synchronization of the image and directional light transfer means according to the present invention. As is conventional today, an image is formed by light emitting diodes, light guides, filters etc to form the image 17. The pixel values are stored in a random access memory RAM 18. In a conventional display system, the RAM 18 is updated typically 70 times per second (Hz) in order to obtain a steady image. With conventional display technology it is however already today possible to achieve a switching frequency of 200 Hz. Thus, conventional components already have the capacity of implementing the switching frequency of the present invention. When more viewing angles and higher frequencies are desired, a faster RAM may be required. In the alternative, a larger RAM may be used. Part of the RAM then stores pixel values for the whole display, namely those pixel values that are to be displayed at the same time relating to defined viewing angles. Then another part of the RAM stores pixel values for the whole display to be displayed at another moment. For two viewing angles, the RAM 18 is sized to hold at least two images in separate parts, and each part of the RAM has to be updated at half the switching frequency of the display. The two parts are sent successively to the display at the switching frequency. For four viewing angles, the RAM 18 is sized to hold at least four images in separate parts, and the switching frequency of each part of the RAM has to be at a fourth of the (preferably doubled) switching frequency of the display. The four parts are sent successively to the display at the switching frequency.

The RAM 18 is controlled by a multiplex control means 19 according to the present invention. The multiplex control means 19 receives image signals 21 containing information related to two or more viewing angles. The image signals may be supplied in series or parallel as the case may be. The multiplex control means 19 extracts information relating to a separate viewing angle and stores the corresponding pixel values in the RAM 18 and controls the RAM 18 to apply the correct pixel values in the image 17. At the same time the multiplex control means sends control signals 22 to the directional light transfer means 19, which may be in the form of variable parallax barriers or a variable lenticular lens system. The switching of the directional light transfer means 19 is controlled so that it is synchronized with the switching of the pixel values form the RAM 18, so that the correct viewing angle is achieved for each pixel or band of pixels as the case may be. In other words, after showing one image consisting of emission of light into a number (1 to 4 or higher) of viewing angles, the pixel values of the image are switched at the same time as the viewing angles are switched to a complementary set of viewing angles by means of the directional light transfer means 9. This is repeated until all pixels have been viewed from all viewing angles. Then the cycle starts again. In case of moving pictures, then the next frame is displayed in this time multiplexed fashion. In case of a still picture, the cycle is repeated for the same picture.

Note that further viewing angles may be provided also in the embodiment shown in fig. 3, as outlined with dashed broad arrows and dashed extra pixel bands R2 and L2. This requires more densely packed pixels, as shown by the pixel with the broken lines.

The invention may be implemented by means of conventional components already existing on the market today. The scope of the invention is only limited by the claims below.

## Claims

1. Arrangement for creating a three dimensional display in a device comprising: a display means (2; 6a, 6b; 17) with pixels having the capacity of emitting or reflecting light; a directional light transfer means (1; 4; 20) having the capacity of transferring light in certain directions and/or blocking light in other directions,
**characterised by**
a multiplex control means (19) having the capacity of receiving image signals containing image information related to two or more viewing angles and of separating images related to separate viewing angles, wherein the multiplex control means (19) is adapted to control the display means (2; 6a, 6b; 17) to display two or more images of which, in each image, each pixel is associated with a specific viewing angle; to switch between images related to separate viewing angles at a switching frequency; and to control the directional light transfer means (1; 4; 20) to admit viewing of each pixel in its specific viewing angle only, the switching between images being synchronised with the control of the directional light transfer means (1; 4; 20).

2. Arrangement according to claim 1, wherein the multiplex control means (19) is adapted to control the display means (2; 6a, 6b; 17) to display two images and the switching frequency is approximately 48 Hz or greater.

3. Arrangement according to claim 1, wherein the multiplex control means (19) is adapted to control the display means (2; 6a, 6b; 17) to display four images and the switching frequency is approximately 96 Hz or greater.

4. Arrangement according to any one of the previous claims, wherein the device comprises a random access memory (18) for storing pixel values of the display means.

5. Arrangement according to claim 4, wherein the multiplex control means (19) is adapted to control the random access memory (18) to be updated at the switching frequency.

6. Arrangement according to claim 4, wherein the random access memory (18) is adapted to store two images at the same time, and the multiplex control means (19) is adapted to control individual pixel values of the random access memory (18) to be updated at half the switching frequency.

7. Arrangement according to any one of the previous claims, wherein said viewing angles are separated by approximately 7°.

8. Arrangement according to any one of claims 1 to 7, wherein the directional light transfer means (20) comprises a parallax barrier means with elements (1) that may be activated and deactivated, such that light emanating from a first set of pixels (L) of the display means (17) are transferred in a first set of viewing angles and light emanating from a second set of pixels (R) of the display means (17) are transferred in a second set of viewing angles.

9. Arrangement according to claim 8, wherein the parallax barrier means may be controlled to transfer light in further defined viewing angles, such that light emanating from a third set of pixels of the display means are transferred in a third set of viewing angles and light emanating from a fourth set of pixels (R2) of the display means are transferred in a fourth set of viewing angles.

10. Arrangement according to claim 8 or 9, wherein the multiplex control means (19) is adapted to control the directional light transfer means (1) such that the whole display means (2) is visible in all sets of viewing angles in a time multiplexed fashion.

11. Arrangement according to claim 8, 9 or 10, wherein the parallax barrier means comprises controllable display strips (1).

12. Arrangement according to any one of claims 1 to 7, wherein the directional light transfer means (20) comprises a lenticular lens system (4) arranged with lens elements that may be controlled to transfer light in defined viewing angles, such that light emanating from a first set of pixels (6a) of the display means (17) are transferred in a first set of viewing angles (A1) and light emanating from a second set of pixels (6b) of the display means (17) are transferred in a second set of viewing angles (A2).

13. Arrangement according to claim 12, wherein the lenticular lens system (4; 20) may be controlled to transfer light in further defined viewing angles, such that light emanating from a third set of pixels of the display means are transferred in a third set of viewing angles (A3) and light emanating from a fourth set of pixels of the display means are transferred in a fourth set of viewing angles (A4).

14. Arrangement according to claim 12 or 13, wherein the multiplex control means (19) is adapted to control the directional light transfer means (4; 20) such that the whole display means (6a, 6b; 17) is visible in all sets of viewing angles in a time multiplexed fashion.

15. Arrangement according to any one of the previous claims, wherein the device is a mobile telephone, a pager, a communicator, an electric organiser, a smartphone, a camera or a game device.
